# EUROPEAN PATENT APPLICATION

(11) **EP 3 249 524 A1**
(43) Date of publication of application: **29.11.2017**
(21) Application number: 17171821.6
(22) Date of filing: 18.05.2017
(51) Int. Cl.: G06F 9/445, H04W 80/00, H04W 88/00

(54) **METHOD AND DEVICE FOR UPGRADING A ZIGBEE DEVICE**

(30) Priority: 25.05.2016 CN 201610356502
(71) Applicant: Beijing Xiaomi Mobile Software Co., Ltd., Beijing 100085 (CN)
(72) Inventor: SU, Benchang, BEIJING, 100085 (CN); MENG, Deguo, BEIJING, 100085 (CN); HOU, Enxing, BEIJING, 100085 (CN)
(74) Representative: Delumeau, François Guy

(57) **Abstract**

A method and device for upgrading a Zigbee device are provided in the invention. The method includes: downloading (101), when firmware of the Zigbee device needs to be upgraded, a latest version of the firmware from a server; pushing (102) the latest version of the firmware which has been downloaded to the Zigbee device; and issuing (103) a firmware upgrade instruction to the Zigbee device after the latest version of the firmware is pushed to the Zigbee device successfully, to trigger the firmware of the Zigbee device to be upgraded based on the latest version of the firmware.

## Description

### FIELD

The present invention relates to a technical field of communication, and more particularly, to a method and device for upgrading a Zigbee device.

### BACKGROUND

Zigbee is a wireless communication protocol like WiFi. Compared with WiFi, it has the advantages of convenient organizing network and low power consumption, and is widely used in the situations which have a large network size and high power consumption. However, due to a low transmission rate between devices using the Zigbee protocol, it usually takes a long time to upgrade a Zigbee device in the network deployed with Zigbee devices.

### SUMMARY

A method and device for upgrading a Zigbee device are provided by the present invention to overcome an existing problem in the prior art.

According to a first aspect of embodiments of the present invention, a method for upgrading a Zigbee device is provided. The method may include: downloading, when firmware of the Zigbee device needs to be upgraded, the latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware.

In a particular embodiment, the method may further comprise: acquiring the current version of the firmware of the Zigbee device; querying the server for the latest version of the firmware of the Zigbee device; judging whether the current version of the firmware of the Zigbee device is the same as the latest version of the firmware; and determining that the firmware of the Zigbee device needs to be upgraded, if the current version of the firmware of the Zigbee device is different from the latest version of the firmware.

In a particular embodiment, querying the server for the latest version of firmware of the Zigbee device comprises: regularly sending a query command for querying the latest version of the firmware to the server based on a set sending time; and acquiring a query result returned from the server, which is corresponding to the query command, the query result comprising the latest version of the firmware.

In a particular embodiment, the set sending time is randomly selected from a preset period of time.

In a particular embodiment, the query result further comprises a download address corresponding to the latest version of the firmware; downloading the latest version of the firmware from the server comprises: downloading the latest version of the firmware to the server based on the download address.

According to a second aspect of embodiments of the present invention, a device for upgrading a Zigbee device is provided. The device may comprise: a download module configured to download, when firmware of the Zigbee device needs to be upgraded, the latest version of the firmware from a server; a pushing module configured to push the latest version of the firmware which has been downloaded to the Zigbee device; and an issuing module configured to issue a firmware upgrade instruction to the Zigbee device after the latest version of the firmware is pushed to the Zigbee device successfully, to trigger the firmware of the Zigbee device to be upgraded based on the latest version of the firmware.

In a particular embodiment, the device may further comprise: an acquiring module configured to acquire the current version of the firmware of the Zigbee device; a query module configured to query the server for the latest version of the firmware of the Zigbee device; a judging module configured to judge whether the current version of the firmware of the Zigbee device is the same as the latest version of the firmware; and a determining module configured to determine that the firmware of the Zigbee device needs to be upgraded, if the current version of the firmware of the Zigbee device is different from the latest version of the firmware.

In a particular embodiment, the query module comprises: a sending sub-module configured to regularly send a query command for querying the latest version of the firmware to the server based on a set sending time; and an acquiring sub-module configured to acquire a query result returned from the server, which is corresponding to the query command, the query result comprising the latest version of the firmware.

In a particular embodiment, the set sending time is randomly selected from a preset period of time.

In a particular embodiment, the query result further comprises a download address corresponding to the latest version of the firmware; the download module comprises: a download sub-module configured to download the latest version of the firmware from the server based on the download address.

According to a third aspect of embodiments of the present invention, a device for upgrading a Zigbee device is provided. The device may comprise: a processor; and a memory for storing instructions executable by the processor; wherein the processor is configured to download, when firmware of the Zigbee device needs to be upgraded, the latest version of the firmware from a server; push the latest version of the firmware which has been downloaded to the Zigbee device; and issue a firmware upgrade instruction to the Zigbee device after the latest version of the firmware is pushed to the Zigbee device successfully, to trigger the firmware of the Zigbee device to be upgraded based on the latest version of the firmware.

The advantages and features of the devices according to the embodiments of the present invention are the same with those of the above described method and will not be repeated here.

In a particular embodiment, the steps of the method for upgrading a Zigbee device are determined by computer program instructions.

Consequently, according to a fourth aspect, the invention is also directed to a computer program for executing the steps of a method for upgrading a Zigbee device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Embodiments of the present invention may provide at least some of the following beneficial effects.

In embodiments of the present invention, a silent upgrade mechanism is provided for a Zigbee device, which may include: downloading, when firmware of the Zigbee device needs to be upgraded, a latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware. Thus, the download of the latest version of the firmware of the Zigbee device and upgrade of the version of the firmware based on the latest version of the firmware may be silently implemented without users being aware of the implementation, so as to make the upgrade process transparent to users and avoid the problem that users have to wait a long time to upgrade a Zigbee device due to a low transmission rate between Zigbee devices, which may improve user experience.

It is to be understood that the above general description and the following detailed description are merely for the purpose of illustration and explanation, and are not intended to limit the scope of the protection of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for upgrading a Zigbee device according to an exemplary embodiment;
Fig. 2 is a flow diagram illustrating another method for upgrading a Zigbee device according to an exemplary embodiment;
Fig. 3 is a schematic block diagram illustrating a device for upgrading a Zigbee device according to an exemplary embodiment;
Fig. 4 is a schematic block diagram illustrating another device for upgrading a Zigbee device according to an exemplary embodiment;
Fig. 5 is a schematic block diagram illustrating another device for upgrading a Zigbee device according to an exemplary embodiment;
Fig. 6 is a schematic block diagram illustrating another device for upgrading a Zigbee device according to an exemplary embodiment;
Fig. 7 is a structure diagram illustrating a device for upgrading a Zigbee device according to an exemplary embodiment; and
Fig. 8 is a structure diagram illustrating another device for upgrading a Zigbee device according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present invention. Instead, they are merely examples of devices and methods consistent with aspects related to the present invention as recited in the appended claims.

The terms used in present invention are merely for describing the particular embodiments rather than limiting the present invention. Terms, such as "a", "an", "said", and "the", as used in singular form in present invention and appended claims include plural form, unless otherwise represent other meaning clearly in the context. It also should be understood that the term "and/or" used herein indicates and includes any or all of possible combinations of one or more associated items which have been listed.

It should be understood that the terms "first," "second," and "third," may be used to describe various information, but it not limit to these terms. These terms are only used to separate the same type of the information from each other. For example, the first information may also be referred as the second information without departing from the scope of the present invention, similarly the second information may also be referred to as the first information. The word "if" as used herein may be interpreted as "when" or "while" or "in response to determination" depending on the context.

In related technologies, when a Zigbee device is upgrading (or updating) its firmware, the upgrade is generally triggered manually by a user after the firmware version is updated, and then the Zigbee device may perform protocol conversion through an intelligent gateway integrating a Wi-Fi module with a Zigbee module such that the Zigbee device can access to Internet to communicate with a could server, thus completing the download and upgrade of the new version of the firmware.

However, due to a low transmission rate of the communication between the devices using the Zigbee protocol, for example, the maximum rate of 250kb/s only, it takes a long time to upgrade the firmware of a Zigbee device in the network deployed with Zigbee devices. Therefore, the user often needs to wait a longer time, which may impact the user's experience.

Therefore, a silent (or transparent) upgrade mechanism is provided for a Zigbee device in embodiments of the present invention, which may include: downloading, when firmware of the Zigbee device needs to be upgraded, a latest version of the firmware from a server; pushing (or sending) the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware. Thus, the download of the latest version of the firmware of the Zigbee device and the upgrade of the version of the firmware based on the latest version of the firmware may be silently implemented without users being aware of the implementation, so as to make the upgrade process transparent to users and avoid the problem that users have to wait a long time to upgrade a Zigbee device due to a low transmission rate between Zigbee devices, which may improve user experience.

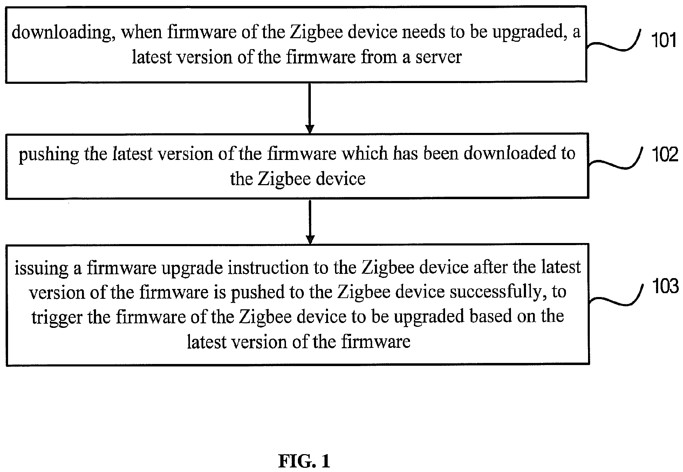

Fig. 1 illustrates a method for upgrading a Zigbee device according to an exemplary embodiment. The method for upgrading a Zigbee device may be applied to an intelligent gateway and may include following steps.

In step 101, when firmware of the Zigbee device needs to be upgraded, the latest version of the firmware is downloaded from a server.

In step 102, the latest version of the firmware which has been downloaded is pushed to the Zigbee device.

In step 103, a firmware upgrade instruction is issued to the Zigbee device after the latest version of the firmware is pushed to the Zigbee device successfully, to trigger the firmware of the Zigbee device to be upgraded based on the latest version of the firmware.

The above described Zigbee device may include an intelligent device running the Zigbee protocol and communicating based on the Zigbee protocol, for example, the Zigbee device may include a wireless doorbell button, a human infrared motion sensor, a door and window sensor or other kinds of intelligent devices which are deployed in household environment with a low power consumption to communicate based on the Zigbee protocol.

The above described server may include a server, a server cluster deployed on a cloud computing network or a cloud computing platform constructed based on a server cluster. The server is used to store the latest version of firmware required when the firmware of a Zigbee device is upgraded.

The above described intelligent gateway may include a gateway device integrating a WiFi module with A Zigbee module, for example, an intelligent router or server. The WiFi module of the intelligent gateway device may communicate with Zigbee module via a series port. The WiFi module may access to Internet through WiFi to communicate data with a cloud server. In practice, the intelligent gateway may be used as a key device and deployed in the application environment constructed based on Zigbee devices (e.g., the intelligent household environment with low power consumption). The Zigbee device in this application environment may perform protocol conversion using the WiFi module and the Zigbee module of the intelligent gateway to access = Internet, so as to communicate data with the cloud server.

In an embodiment, after a Zigbee device left the factory, the firmware of the device may present some defects, or the Zigbee device may need to add a new function in a practical application example, so there exists a demand of upgrading the firmware for the Zigbee device. In the related technologies, in general, the upgrade of a Zigbee device is triggered manually by a user when the Zigbee device needs upgrading. For example, when a new version of the firmware of the Zigbee device exists, the server may send a update notification of a new version of the firmware to the Zigbee device, the Zigbee device may prompt the user to notice the update via a system interface, and then the user may manually trigger the Zigbee device to perform the firmware upgrade (e.g., the user may click a upgrade icon on the system interface to trigger the Zigbee device to perform the firmware upgrade), meanwhile, the Zigbee device may communicate data with the server based on the Zigbee protocol to download the latest version of the firmware, to complete the upgrade. However, due to manually triggering the upgrade of the Zigbee device by the user and a low transmission rate of the communication between the devices using the Zigbee protocol, the whole upgrade process often causes the user to wait a long time, resulting in bad user experience.

Therefore, a silent upgrade mechanism is provided for a Zigbee device in embodiments of the present invention, which may include: downloading, when firmware of the Zigbee device needs to be upgraded, the latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware. Thus, the silent implementation of downloading the latest version of the firmware of the Zigbee device and upgrading the version of the firmware based on the latest version of the firmware may be achieved without being aware by users, so as to avoid the problem that users wait for a long time to upgrade a Zigbee device due to a low transmission rate between Zigbee devices, which may improve user experience.

The technical solution of the present invention is described below in detail in conjunction with specific application scenarios.

In one shown application scenario, which may be an intelligent household environment with low power consumption, the intelligent devices are required to have low power consumption. Compared with WiFi protocol, the Zigbee protocol has the advantage of low power consumption, so the intelligent devices supporting the Zigbee protocol and communicating based on the Zigbee protocol may be used to construct the said intelligent household environment with low power consumption. For example, Xiaomi Inc. introduced "an intelligent home security suite" which includes an intelligent gateway and a wireless doorbell button, a human infrared motion sensor, a door and window sensor communicating based on the Zigbee protocol.

In the embodiment, the intelligent devices in the intelligent household environment all support communicating with a Zigbee module of the intelligent gateway via the standard Zigbee protocol, so the intelligent gateway may communicate with each of the Zigbee devices via the Zigbee module to acquire the current version of the firmware of the Zigbee device.

Meanwhile, the intelligent gateway may communicate with the server via a WiFi module to query for the latest version of the firmware of each Zigbee device.

In a shown implementation, the intelligent gateway may send a query command (or message) to the server for querying the latest version of the firmware of each Zigbee device, and then the latest version of the firmware of each Zigbee device may be acquired by acquiring the returned response command.

The query command may carry (or comprise) a type identification of a Zigbee device to be queried and the current version of the firmware of the Zigbee device. After receiving the query command, the server may compare the current version of the firmware of the Zigbee device carried by the query command with the latest version of the firmware of the Zigbee device stored locally in the server, and if they are the same, the firmware version of the Zigbee device has already been the latest version and need not to be upgraded, so the server may not respond to the query command or just return a null value. If they are different, the version of the firmware of the Zigbee device needs to be upgraded, so the server may respond to the query command normally and return a corresponding response command to the intelligent gateway. The response command may carry a query result corresponding to the query command, which may carry the type identification and the latest version of the firmware of the Zigbee device. In addition, in a practical application example, the response command may also carry a download address of the latest version of the firmware to facilitate the intelligent gateway to download the latest version of the firmware based on the download address.

For example, in an embodiment, the format of a query command may be as follow:

```
         {method:
         get_subdev_version,params:
         [string(model),string(fw_version)]}
```

The format of the above described response command may be as follow:

```
         {result:
         [model:lumi.xxx.xxx,
         fw_version:xxx,
         hw_version:xxx,
         url:http://xxx.ota.bin,md5:xxx,des:xxx]}
```

In the above described query command and response command, the parameter 'model' is the type identification of the queried Zigbee device for uniquely identifying the device; 'fw_version' is the current version of the firmware of the Zigbee device; 'hw_version' is the latest version of the firmware of the queried Zigbee device; and 'url' is the download address of the latest version of the firmware.

In addition, the intelligent gateway may send the query command regularly based on a set sending time, for example, the sending time may be 10 pm every day. The set sending time may be randomly selected from a preset period of time, for example, the preset period of time may be set based on a characteristic of the working time of the server, such as if the system maintenance time of the server is from 10 pm to 6 am every day, during which the daily service communication with the outside is not permitted usually, said preset period of time may set as from 6 am to 10 pm, during which the server can perform the daily service communication. Furthermore, a point in time may be randomly selected from the preset period of time to send the query command when the intelligent gateway is setting the sending time. The server usually serves several intelligent gateways, so if all the intelligent gateways send query commands based on the same sending time for upgrading the Zigbee devices connected with the intelligent gateways, upgrade congestion would be caused by intensive data accesses at the same time. Therefore, the manner of selecting the sending time randomly may ensure to diversify the time for sending the query command by each intelligent gateway, so as to avoid the situation of upgrade congestion.

In the embodiment, after receiving the response command returned from the server, the intelligent gateway may read the latest version of the firmware of the Zigbee device carried in the response command and compare it with the current version of the firmware of the Zigbee device, to determine whether the current version of the firmware of the Zigbee device is the same as the latest version of the firmware, if they are the same, it indicates that the version of the firmware the Zigbee device need not to be upgraded, in this case, the Zigbee device may be initiated (or started up) and operated using the current version of the firmware without any special treatments.

If they are different, the intelligent gateway may download the latest version of the firmware from the download address of the latest version of the firmware carried in the response command.

After the intelligent gateway downloads the latest version of the firmware successfully, the latest version of the firmware may be pushed to the corresponding Zigbee device, wherein the intelligent gateway may actively or passively push the latest version of the firmware to the Zigbee device. For example, the intelligent gateway may push the downloaded firmware to the Zigbee device immediately after the latest version of the firmware is downloaded successfully; or each Zigbee device may send a query message to the intelligent gateway regularly to query if the intelligent gateway has stored the latest version of the firmware, and after the intelligent gateway downloads the latest version of the firmware successfully and receives the query message from each Zigbee device, it can send the downloaded latest version of the firmware to each Zigbee device.

In an embodiment, each Zigbee device may store the latest version of the firmware pushed by the intelligent gateway in the background; wherein after receiving the latest version of the firmware pushed by the intelligent gateway, each Zigbee device may store the received firmware in a backing storage (or secondary storage) of the MCU (Microcontroller Unit) of the device such that the current normal operation is not affected.

After pushing the latest version of the firmware to each Zigbee device successfully, the intelligent gateway may issue a firmware upgrade instruction to the Zigbee device which needs to be upgraded, and the Zigbee device may upgrade the version of the firmware based on the latest version of the firmware stored locally in the Zigbee device after receiving the latest version of the firmware pushed by the intelligent gateway.

When upgrading the version of the firmware based on the latest version of the firmware, the Zigbee device may output a prompt message to the user via the system interface, for example, the prompt message may be "upgrade to the latest version of the firmware or not", and the user may start the firmware version upgrade by triggering a upgrade icon on the system interface.

In the process of upgrading the version of the firmware, the Zigbee device may perform a restart operation. During the restart process, the Zigbee device may read the latest version of the firmware, replace or update the current version of the firmware stored in the MCU of the device. After the start process is completed, the Zigbee device may operate the latest version of the firmware. Then the firmware version upgrade is completed.

When the Zigbee device receives the firmware upgrade command issued by the intelligent gateway, the latest version of the firmware has been downloaded locally in advance and the user is not aware of the download process, so the Zigbee device may complete the firmware version upgrade immediately using the latest version of the firmware stored locally. In this manner, the user needs not wait for upgrade due to the immediate response to the whole upgrade process, which may improve user experience.

In the above embodiment, a silent upgrade mechanism is provided for a Zigbee device, which may include: downloading, when firmware of the Zigbee device needs to be upgraded, a latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware. Thus, the silent implementation of downloading the latest version of the firmware of the Zigbee device and upgrading the version of the firmware based on the latest version of the firmware may be achieved without disturbing users, so as to avoid the problem that users wait for a long time to upgrade a Zigbee device due to a low transmission rate between Zigbee devices, which may improve user experience.

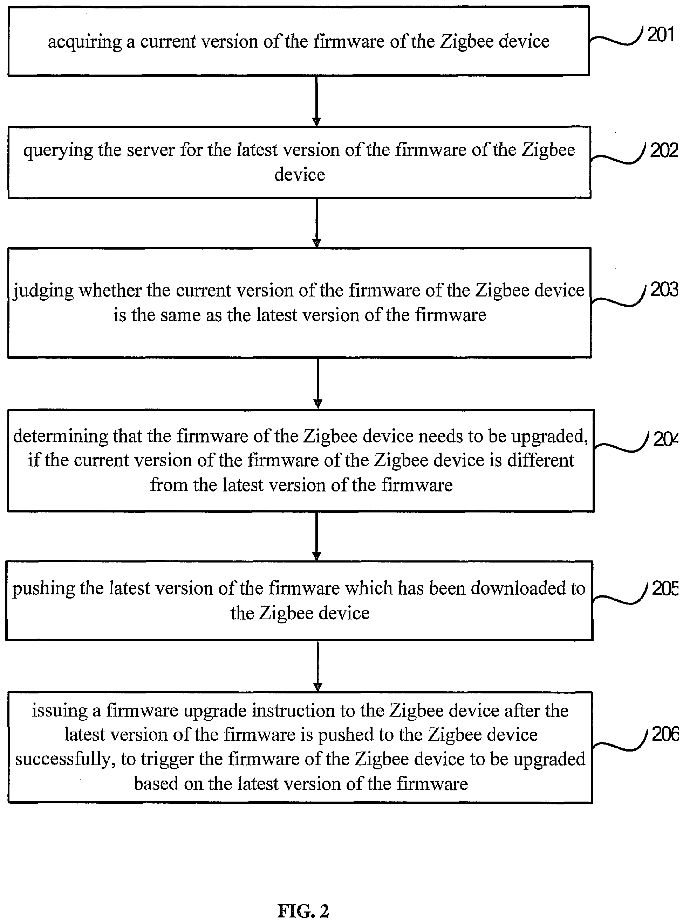

Fig. 2 illustrates another method for upgrading a Zigbee device according to an exemplary embodiment. The method for upgrading a Zigbee device may be applied to an intelligent gateway and may include following steps.

In step 201, a current version of the firmware of the Zigbee device is acquired.

In step 202, a server is queried for the latest version of the firmware of the Zigbee device.

In step 203, whether the current version of the firmware of the Zigbee device is the same as the latest version of the firmware is judged.

In step 204, if the current version of the firmware of the Zigbee device is different from the latest version of the firmware, the firmware of the Zigbee device needs to be upgraded.

In step 205, the latest version of the firmware which has been downloaded is pushed to the Zigbee device.

In step 206, a firmware upgrade instruction is issued to the Zigbee device after the latest version of the firmware is pushed to the Zigbee device successfully, to trigger the firmware of the Zigbee device to be upgraded based on the latest version of the firmware.

The above described Zigbee device may include an intelligent device running the Zigbee protocol and communicating based on the Zigbee protocol, for example, the Zigbee device may include a wireless doorbell button, a human infrared motion sensor, a door and window sensor or other kinds of intelligent devices which are deployed in household environment with a low power consumption to communicate based on the Zigbee protocol.

The above described server may include a server, a server cluster deployed on the cloud or a cloud platform constructed based on a server cluster. The server is used to store a latest version of the firmware required when the firmware of a Zigbee device is upgraded.

The above described intelligent gateway may include a gateway device integrating a WiFi module with A Zigbee module, for example, an intelligent router or server. The WiFi module of the intelligent gateway device may communicate with Zigbee module via a series port. The WiFi module may access to Internet via WiFi to communicate data with a cloud server. In practice, the intelligent gateway may be used as a key device and deployed in the application environment constructed based on Zigbee devices (e.g., the intelligent household environment with low power consumption). The Zigbee device in this application environment may perform protocol conversion using the WiFi module and the Zigbee module of the intelligent gateway to access to Internet, so as to communicate data with the cloud server.

In the embodiment, after the Zigbee device left factory, the firmware of the device may exist some defects, or the Zigbee device need to add a new function in practical application, so there exists a demand of upgrading the firmware for the Zigbee device. In the related technologies, in general, the upgrade of a Zigbee device is triggered manually by the user when the Zigbee device is upgrading. For example, when a new version of the firmware of the Zigbee device exists, the server may send a update notification of a new version of the firmware to the Zigbee device, the Zigbee device may prompt the update to the user via a system interface, and then the user may manually trigger the Zigbee device to perform the firmware upgrade (e.g., the user may click a upgrade icon on the system interface to trigger the Zigbee device to perform the firmware upgrade), meanwhile, the Zigbee device may communicate data with the server based on the Zigbee protocol to download the latest version of the firmware, to complete the upgrade. However, due to manually triggering the upgrade of the Zigbee device by the user and a low transmission rate of the communication between the devices using the Zigbee protocol, the whole upgrade process often causes the user to wait a long time, resulting in bad user experience.

Therefore, a silent upgrade mechanism is provided for a Zigbee device in embodiments of the present invention, which may include: downloading, when firmware of the Zigbee device needs to be upgraded, a latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware. Thus, the silent implementation of downloading the latest version of the firmware of the Zigbee device and upgrading the version of the firmware based on the latest version of the firmware may be achieved without being aware by users, so as to avoid the problem that users wait for a long time to upgrade a Zigbee device due to a low transmission rate between Zigbee devices, which may improve user experience.

The technical solution of the present invention is described below in detail in conjunction with specific application scenarios.

In one shown application scenario, which may be an intelligent household environment with low power consumption, the intelligent devices are required to have low power consumption. Compared with WiFi, the Zigbee protocol has the advantage of low power consumption, so the intelligent devices supporting the Zigbee protocol and communicating based on the Zigbee protocol may be used to construct the said intelligent household environment with low power consumption. For example, Xiaomi Inc. introduced "an intelligent home security suite" which includes an intelligent gateway and a wireless doorbell button, a human infrared motion sensor, a door and window sensor communicating based on the Zigbee protocol.

In the embodiment, the intelligent devices in the intelligent household environment all support to communicate with the Zigbee module of the intelligent gateway via the standard Zigbee protocol, so the intelligent gateway may communicate with each of the Zigbee devices via the Zigbee module to acquire the current version of the firmware of the Zigbee device.

Meanwhile, the intelligent gateway may also communicate with the server via the WiFi module to query for the latest version of the firmware of each Zigbee device.

In a shown implementation, the intelligent gateway may send a query command to the server for querying the latest version of the firmware of each Zigbee device, and then the latest version of the firmware of each Zigbee device may be acquired by acquiring the returned response command.

The query command may carry the type identification of the Zigbee device to be queried and the current version of the firmware of the Zigbee device. After receiving the query command, the server may compare the current version of the firmware of the Zigbee device carried by the query command with the latest version of the firmware of the Zigbee device stored locally, and if they are the same, the firmware version of the Zigbee device has already been the latest version and need not to be upgraded, so the server may not respond to the query command or just return a null value. If they are different, the Zigbee device need to be upgraded the version of the firmware, so the server may respond to the query command normally and return a corresponding response command to the intelligent gateway. The response command may carry a query result corresponding to the query command, which may carry the type identification and the latest version of the firmware of the Zigbee device. In addition, in practical application, the response command may also carry a download address of the latest version of the firmware to facilitate the intelligent gateway to download the latest version of the firmware based on the download address.

For example, in an embodiment, the format of the query command may be as follow:

```
         {method:
         get_subdev_version, params:
         [string(model),string(fw_version)]}
```

The format of the above described response command may be as follow:

```
         {result:
         [model:lumi.xxx.xxx,
         fw_version:xxx,
         hw_version:xxx,
         url:http://xxx.ota.bin,md5:xxx,des:xxx]}
```

In the above described query command and response command, the parameter 'model' is the type identification of the queried Zigbee device for uniquely identifying the device; 'fw_version' is the current version of the firmware of the Zigbee device; 'hw_version' is the latest version of the firmware of the queried Zigbee device; and 'url' is the download address of the latest version of the firmware.

In addition, the intelligent gateway may send the query command regularly based on a set sending time, for example, the sending time may be 10 pm every day. The set sending time may be selected from a preset period of time randomly, for example, the preset period of time may be set based on a characteristic of the working time of the server, such as if the system maintenance time of the server is from 10 pm to 6 am every day, during which the daily service communication with the outside is not permitted usually, said preset period of time may set as from 6 am to 10 pm, during which the server can perform the daily service communication. Furthermore, a point in time may be selected from the preset period of time randomly to send the query command when the intelligent gateway is setting the sending time. The server usually serve facing several intelligent gateways, so if all the intelligent gateways send query commands based on the same sending time for upgrading the Zigbee devices connected with the intelligent gateways, upgrade congestion would be caused by intensive data accesses at the time. Therefore, the manner of selecting the sending time randomly may ensure to diversify the time for sending the query command by each intelligent gateway, so as to avoid the situation of upgrade congestion.

In the embodiment, after receiving the response command returned from the server, the intelligent gateway may read the latest version of the firmware of the Zigbee device carried in the response command and compare it with the current version of the firmware of the Zigbee device, to determine whether the current version of the firmware of the Zigbee device is the same as the latest version of the firmware, if they are the same, it indicates that the version of the firmware of the Zigbee device need not to be upgraded, in this case, the Zigbee device may be initiated and operated using the current version of the firmware without any special treatments.

If they are different, the intelligent gateway may download the latest version of the firmware from the download address of the latest version of the firmware carried in the response command.

After the intelligent gateway downloads the latest version of the firmware successfully, the latest version of the firmware may be pushed to the corresponding Zigbee device, wherein the intelligent gateway may push the latest version of the firmware to the Zigbee device actively or passively. For example, the intelligent gateway may push the downloaded firmware to the Zigbee device immediately after the latest version of the firmware is downloaded successfully; or each Zigbee device may send a query message to the intelligent gateway regularly to query if the intelligent gateway has stored the latest version of the firmware, and after the intelligent gateway downloads the latest version of the firmware successfully and receives the query message from each Zigbee device, it can send the downloaded latest version of the firmware to each Zigbee device.

In the embodiment, each Zigbee device may store the latest version of the firmware pushed by the intelligent gateway in the background; wherein after receiving the latest version of the firmware pushed by the intelligent gateway, each Zigbee device may store the received firmware in a backing storage of the MCU of the device such that the current normal operation is not affected.

After pushing the latest version of the firmware to each Zigbee device successfully, the intelligent gateway may issue a firmware upgrade instruction to the Zigbee device which need to be upgraded, and the Zigbee device may upgrade the version of the firmware based on the latest version of the firmware stored locally after receiving the latest version of the firmware pushed by the intelligent gateway.

When upgrading the version of the firmware based on the latest version of the firmware, the Zigbee device may output a prompt message to the user via the system interface, for example, the prompt message may be "upgrade to the latest version of the firmware or not", and the user may start the firmware version upgrade by triggering a upgrade icon on the system interface.

In the process of upgrading the version of the firmware, the Zigbee device may perform a restart operation. During the restart process, the Zigbee device may read the latest version of the firmware, replace or update the current version of the firmware stored in the MCU of the device. After the start process is completed, the Zigbee device may operate the latest version of the firmware. Then the firmware version upgrade is completed.

As can be seen, in this manner, when the Zigbee device receives the firmware upgrade command issued by the intelligent gateway, the latest version of the firmware has already downloaded locally and the download process is not aware by the user, so the Zigbee device may complete the firmware version upgrade immediately using the latest version of the firmware stored locally. For users, they need not wait for upgrade due to the immediate response to the whole upgrade process, which may improve user experience.

In the above embodiment, a silent upgrade mechanism is provided for a Zigbee device, which may include: downloading, when firmware of the Zigbee device needs to be upgraded, a latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware. Thus, the silent implementation of downloading the latest version of the firmware of the Zigbee device and upgrading the version of the firmware based on the latest version of the firmware may be achieved without being aware by users, so as to avoid the problem that users wait for a long time to upgrade a Zigbee device due to a low transmission rate between Zigbee devices, which may improve user experience.

Corresponding to the previous embodiments for method, an device embodiment is provided in the prevent invention.

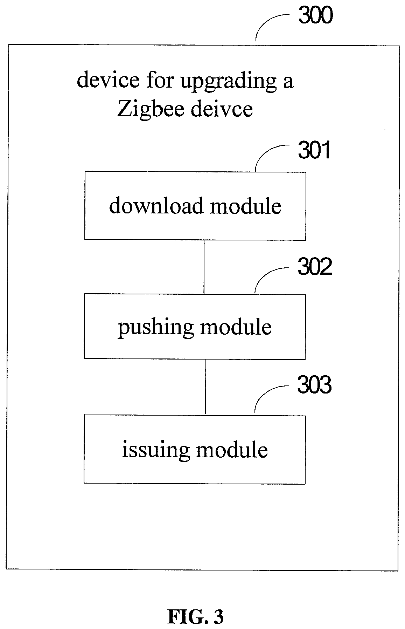

Fig. 3 is a schematic block diagram illustrating a device for upgrading a Zigbee device according to an exemplary embodiment.

As shown in Fig.3, a device 300 for upgrading a Zigbee device illustrated according to an exemplary embodiment includes: a download module 301, a pushing module 302 and an issuing module 303.

The download module 301 is configured to download, when firmware of the Zigbee device needs to be upgraded, a latest version of the firmware from a server.

The pushing module 302 is configured to push the latest version of the firmware which has been downloaded to the Zigbee device.

The issuing module 303 is configured to issue a firmware upgrade instruction to the Zigbee device after the latest version of the firmware is pushed to the Zigbee device successfully, to trigger the firmware of the Zigbee device to be upgraded based on the latest version of the firmware.

In the above described embodiment, a silent upgrade mechanism is provided for a Zigbee device, which may include: downloading, when firmware of the Zigbee device needs to be upgraded, a latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware. Thus, the silent implementation of downloading the latest version of the firmware of the Zigbee device and upgrading the version of the firmware based on the latest version of the firmware may be achieved without being aware by users, so as to avoid the problem that users wait for a long time to upgrade a Zigbee device due to a low transmission rate between Zigbee devices, which may improve user experience.

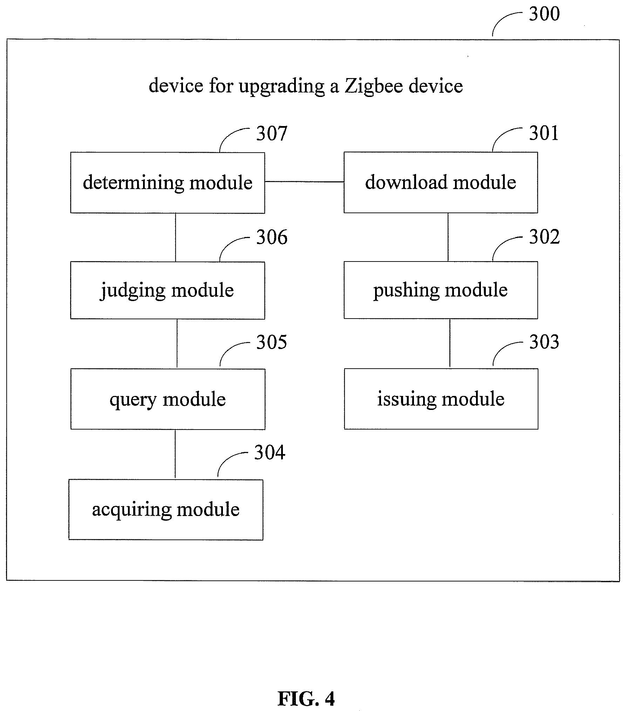

Fig. 4 is a schematic block diagram illustrating a device for upgrading a Zigbee device according to another exemplary embodiment which is based on the embodiment shown in Fig.3. The device 300 may further include an acquiring module 304, a query module 305, a judging module 306 and a determining module 307.

The acquiring module 304 is configured to acquire a current version of the firmware of the Zigbee device.

The query module 305 is configured to query the server for the latest version of the firmware of the Zigbee device.

The judging module 306 is configured to judge whether the current version of the firmware of the Zigbee device is the same as the latest version of the firmware.

The determining module 307 is configured to determine that the firmware of the Zigbee device needs to be upgraded, if the current version of the firmware of the Zigbee device is different from the latest version of the firmware.

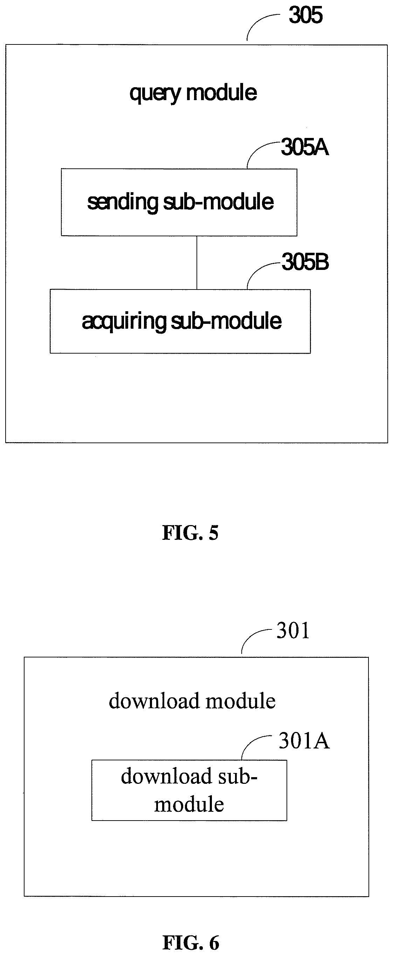

Fig. 5 is a schematic block diagram illustrating another device for upgrading a Zigbee device according to an exemplary embodiment which is based on the embodiment shown in Fig.4. The query module 305 may include a sending sub-module 305A and an acquiring sub-module 305B.

The sending sub-module 305A is configured to send a query command for querying the latest version of the firmware to the server regularly based on a set sending time.

The acquiring sub-module 305B is configured to acquire a query result returned from the server, which is corresponding to the query command, and the query result comprises the latest version of the firmware.

It should be noted that the sending sub-module 305A and the acquiring sub-module 305B illustrated in the embodiment of the device of Fig.5 may be included in the previous embodiment of the device of Fig. 3, which is not restricted by the present invention.

In the above described embodiments, the set sending time is selected from a present period of time randomly.

Referring to Fig.6 is a schematic block diagram illustrating another device for upgrading a Zigbee device according to an exemplary embodiment which is based on the embodiment of Fig. 5. The query result may further include a download address corresponding to the latest version of the firmware; the download module 301 may include a download sub-module 301A.

The download sub-module 301A is configured to download the latest version of the firmware from the server based on the download address.

It should be noted that the download sub-module 301A illustrated in the embodiment of the device of Fig.6 may be included in the previous embodiment of the device of Fig. 3 and Fig. 4, which is not restricted by the present invention.

Description of corresponding steps of the device may be referred to details of the process in which functions and effects of respective modules are realized, so no more tautology here.

For an embodiment of a device, since it substantially corresponds to an embodiment of a method, description of a certain part of the method may be referred to for description of a relevant part of the device. The above-described embodiments of a device are for illustrative purposes only, wherein elements described as separate components may or may not be physically separated, and components illustrated as elements may or may not be physical elements (i.e., these components may be located in the same place, or be distributed in several network elements). Part or all of the modules may be selected to realize the purposes of the scheme of this invention according to actual needs. Those of ordinary skill in the art may be able to understand and practice the scheme without creative efforts.

Accordingly, A device for upgrading a Zigbee device is provided in the present invention, the device may include:
a processor; and
a memory for storing instructions executable by the processor;
wherein the processor is configured to:
   download, when firmware of the Zigbee device needs to be upgraded, a latest version of the firmware from a server;
   push the latest version of the firmware which has been downloaded to the Zigbee device; and
   issue a firmware upgrade instruction to the Zigbee device after the latest version of the firmware is pushed to the Zigbee device successfully, to trigger the firmware of the Zigbee device to be upgraded based on the latest version of the firmware.

Accordingly, an intelligent gateway is provided by the present invention, the intelligent gateway may include a storage and one or more programs stored in the storage and comprising instructions, and when the instructions are executed by one or more processor operable to: download, when firmware of the Zigbee device needs to be upgraded, a latest version of the firmware from a server; push the latest version of the firmware which has been downloaded to the Zigbee device; and issue a firmware upgrade instruction to the Zigbee device after the latest version of the firmware is pushed to the Zigbee device successfully, to trigger the firmware of the Zigbee device to be upgraded based on the latest version of the firmware.

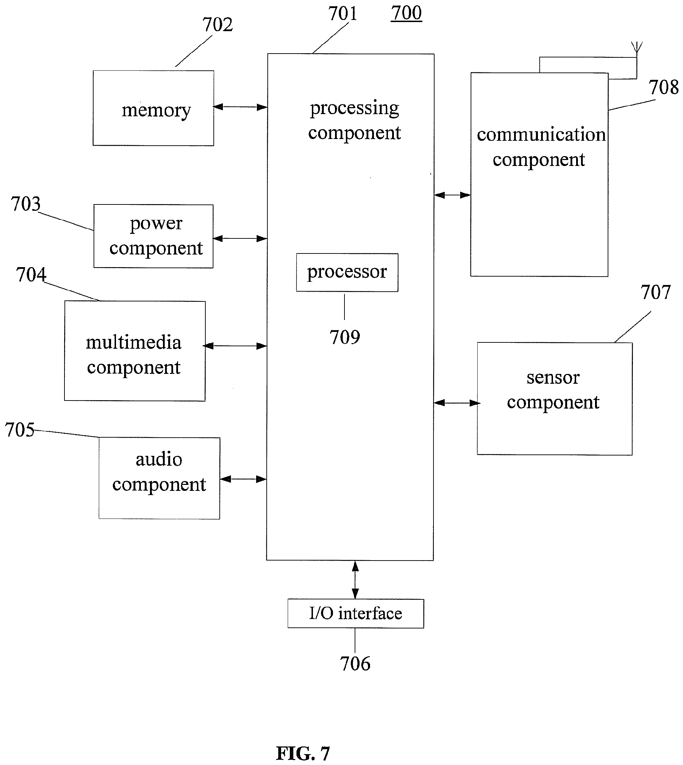

Fig. 7 is a structure diagram illustrating a device for upgrading a Zigbee device according to an exemplary embodiment.

As shown in Fig. 7, there is provided an device 700 for upgrading a Zigbee device according to an exemplary embodiment. For example, the device 700 may be a mobile phone, a computer, a digital broadcast terminal, a messaging device, a gaming console, a tablet, a medical device, an exercise equipment, a personal digital assistant, and the like.

Referring to Fig. 7, the device 700 may include one or more of the following components: a processing component 701, a memory 702, a power component 703, a multimedia component 704, an audio component 705, an input/output (I/O) interface 706, a sensor component 707, and a communication component 708.

The processing component 701 typically controls overall operations of the device 700, such as the operations associated with display, telephone calls, data communications, camera operations, and recording operations. The processing component 701 may include one or more processors 709 to execute instructions to perform all or part of the steps in the above described methods. Moreover, the processing component 701 may include one or more modules which facilitate the interaction between the processing component 701 and other components. For instance, the processing component 701 may include a multimedia module to facilitate the interaction between the multimedia component 704 and the processing component 701.

The memory 702 is configured to store various types of data to support the operation of the device 700. Examples of such data include instructions for any applications or methods operated on the device 700, contact data, phonebook data, messages, pictures, video, etc. The memory 702 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 703 provides power to various components of the device 700. The power component 703 may include a power management system, one or more power sources, and any other components associated with the generation, management, and distribution of power for the device 700.

The multimedia component 704 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 704 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have optical focusing and zooming capability.

The audio component 705 is configured to output and/or input audio signals. For example, the audio component 705 includes a microphone (MIC) configured to receive an external audio signal when the device 700 is in an operation mode, such as a call mode, a recording mode, and a voice recognition mode. The received audio signal may be further stored in the memory 702 or transmitted via the communication component 708. In some embodiments, the audio component 705 further includes a speaker to output audio signals.

The I/O interface 706 provides an interface between the processing component 701 and peripheral interface modules, the peripheral interface modules being, for example, a keyboard, a click wheel, buttons, and the like. The buttons may include, but are not limited to, a home button, a volume button, a starting button, and a locking button.

The sensor component 707 includes one or more sensors to provide status assessments of various aspects of the device 700. For instance, the sensor component 707 may detect an open/closed status of the device 700, relative positioning of components (e.g., the display and the keypad, of the device 700), a change in position of the device 700 or a component of the device 700, a presence or absence of user contact with the device 700, an orientation or an acceleration/deceleration of the device 700, and a change in temperature of the device 700. The sensor component 707 may include a proximity sensor configured to detect the presence of a nearby object without any physical contact. The sensor component 707 may also include a light sensor, such as a CMOS or CCD image sensor, for use in imaging applications. In some embodiments, the sensor component 707 may also include an accelerometer sensor, a gyroscope sensor, a magnetic sensor, a pressure sensor, or a temperature sensor.

The communication component 708 is configured to facilitate communication, wired or wirelessly, between the device 700 and other devices. The device 700 can access a wireless network based on a communication standard, such as WiFi, 2G, or 3G, or a combination thereof. In an exemplary embodiment, the communication component 708 receives a broadcast signal or broadcast associated information from an external broadcast management system via a broadcast channel. In an exemplary embodiment, the communication component 708 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 702, executable by the processor 709 in the device 700, for performing the above-described methods. For example, the non-transitory computer-readable storage medium may be a ROM, a RAM, a CD-ROM, a magnetic tape, a floppy disc, an optical data storage device, and the like.

The instructions stored in the storage executable by the processer 709, cause the device 700 to perform a method for upgrading a Zigbee device. The method may include: downloading, when firmware of the Zigbee device needs to be upgraded, a latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware.

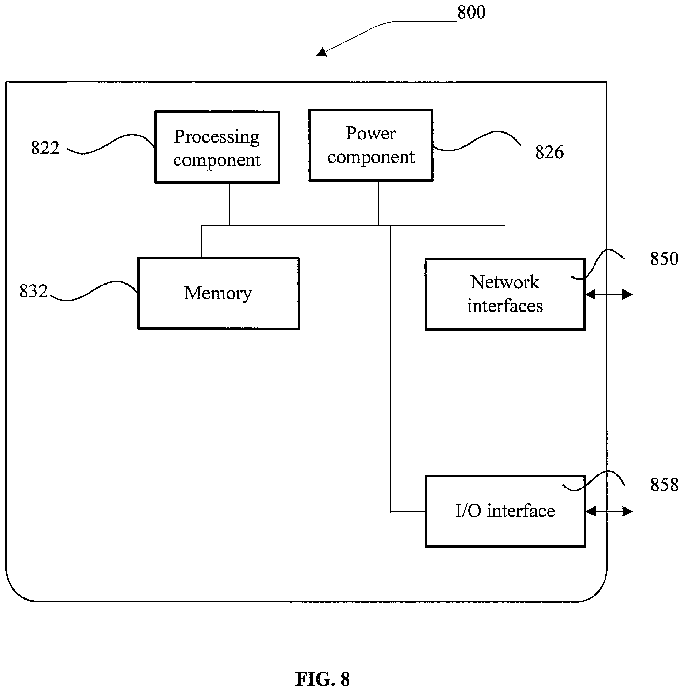

Referring to Fig. 8, Fig. 8 is a structure diagram illustrating a device for upgrading a Zigbee device according to an exemplary embodiment.

For example, the device 800 may be implemented as a server. As shown in Fig. 8, the device 800 may include a processing component 822 having one or more processors, and storage resources represented by memory 832 for storing instructions, e.g., application programs, executable by the processing component 822. The application programs stored in the memory 832 may include one or more modules. Each module may include a set of instructions. Further, the processing component 822 may be configured to execute the sets of instructions and perform the method for upgrading a Zigbee device described above.

The device 800 may also include a power component 826 to perform power management of the device 800, a wired or wireless network interfaces 850 to connect the device 800 to a network, an input/output (I/O) interface 858.

The device 500 may operate based on an independent operating system stored in the memory 832, such as Windows Server™, Mac OS X™, Unix™, Linux™, FreeBSD™, or the like.

The instructions stored in the storage 832 executable by the processing component 822, cause the device 800 to perform a method for upgrading a Zigbee device. The method includes: downloading, when firmware of the Zigbee device needs to be upgraded, a latest version of the firmware from a server; pushing the latest version of the firmware which has been downloaded to the Zigbee device; and issuing a firmware upgrade instruction to the Zigbee device after the latest version of the firmware is pushed to the Zigbee device successfully, to trigger the firmware of the Zigbee device to be upgraded based on the latest version of the firmware.

Other embodiments of the invention will be apparent to those skilled in the art from consideration of the specification and practice of the inventions herein. This application is intended to cover any variations, uses, or adaptations of the invention following the scope of the invention as defined in the appended claims. It is intended that the specification and examples be considered as exemplary only, with the scope of the invention being indicated by the following claims.

It will be appreciated that the invention is not limited to the exact construction that has been described above and illustrated in the accompanying drawings, and that various modifications and changes can be made without departing from the scope thereof. It is intended that the scope of the invention only be limited by the appended claims.

## Claims

1. A method for upgrading a Zigbee device, **characterized by** comprising:
downloading (101), when firmware of the Zigbee device needs to be upgraded, the latest version of the firmware from a server;
pushing (102) the latest version of the firmware which has been downloaded to the Zigbee device; and
issuing (103) a firmware upgrade instruction to the Zigbee device after the latest version of the firmware is pushed to the Zigbee device successfully, to trigger the firmware of the Zigbee device to be upgraded based on the latest version of the firmware.

2. The method of claim 1, the method further comprises:
acquiring (201) the current version of the firmware of the Zigbee device;
querying (202) the server for the latest version of the firmware of the Zigbee device;
judging (203) whether the current version of the firmware of the Zigbee device is the same as the latest version of the firmware; and
determining (204) that the firmware of the Zigbee device needs to be upgraded, if the current version of the firmware of the Zigbee device is different from the latest version of the firmware.

3. The method of claim 2, wherein querying (202) the server for the latest version of firmware of the Zigbee device comprises:
regularly sending a query command for querying the latest version of the firmware to the server based on a set sending time; and
acquiring a query result returned from the server, which is corresponding to the query command, the query result comprising the latest version of the firmware.

4. The method of claim 3, wherein the set sending time is randomly selected from a preset period of time.

5. The method of claim 3 or 4, wherein the query result further comprises a download address corresponding to the latest version of the firmware;
and wherein downloading (101) the latest version of the firmware from the server comprises:
downloading the latest version of the firmware to the server based on the download address.

6. A device for upgrading a Zigbee device, **characterized by** comprising:
a download module (301) configured to download, when firmware of the Zigbee device needs to be upgraded, the latest version of the firmware from a server;
a pushing module (302) configured to push the latest version of the firmware which has been downloaded to the Zigbee device; and
an issuing module (303) configured to issue a firmware upgrade instruction to the Zigbee device after the latest version of the firmware is pushed to the Zigbee device successfully, to trigger the firmware of the Zigbee device to be upgraded based on the latest version of the firmware.

7. The device of claim 6, wherein the device further comprises:
an acquiring module (304) configured to acquire the current version of the firmware of the Zigbee device;
a query module (305) configured to query the server for the latest version of the firmware of the Zigbee device;
a judging module (306) configured to judge whether the current version of the firmware of the Zigbee device is the same as the latest version of the firmware; and
a determining module (307) configured to determine that the firmware of the Zigbee device needs to be upgraded, if the current version of the firmware of the Zigbee device is different from the latest version of the firmware.

8. The device of claim 7, wherein the query module (305) comprises:
a sending sub-module (305A) configured to regularly send a query command for querying the latest version of the firmware to the server based on a set sending time; and
an acquiring sub-module (305B) configured to acquire a query result returned from the server, which is corresponding to the query command, the query result comprising the latest version of the firmware.

9. The device of claim 8, wherein the set sending time is randomly selected from a preset period of time.

10. The device of claim 8 or 9, wherein the query result further comprises a download address corresponding to the latest version of the firmware;
and wherein the download module (301) comprises:
a download sub-module (301A) configured to download the latest version of the firmware from the server based on the download address.

11. A computer program including instructions for executing the steps of a method for upgrading a Zigbee device according to any one of claims 1 to 5 when said program is executed by a computer.

12. A recording medium readable by a computer and having recorded thereon a computer program including instructions for executing the steps of a method for upgrading a Zigbee device according to any one of claims 1 to 5.
